# EUROPÄISCHE PATENTANMELDUNG

(11) **EP 2 246 153 A2**
(43) Veröffentlichungstag der Anmeldung: **03.11.2010**
(21) Anmeldenummer: 10003235.8
(22) Anmeldetag: 26.03.2010
(51) Int. Cl.: B24D 3/34

(54) **Polierscheibe mit einem Polierkörper aus Polyurethanschaum der ein thermochromes Farbmittel enthält**

(30) Priorität: 27.04.2009 DE 202009006069 U
(71) Anmelder: Schaum-Chemie Wilhelm Bauer GmbH & Co. KG, 45141 Essen (DE)
(72) Erfinder: Fach, Thomas, D-45259 Essen (DE); Klösener, Ralf, 45289 Essen (DE)
(74) Vertreter: Ksoll, Peter

(57) **Zusammenfassung**

Die vorliegende Erfindung betrifft eine Polierscheibe, welche einen Polierkörper aus einem Polyurethanschaum aufweist, insbesondere eine Polierscheibe für lackierte Flächen. Der Polyurethanschaum umfasst ein thermochromes Farbmittel, das durch einen Farbumschlag eine zu hohe Drehgeschwindigkeit bzw. einen zu hohen Anpressdruck signalisiert. In einem Ausführungsbeispiel ist das thermochrome Farbmittel in einer Mikrokapsel eingeschlossen.

## Beschreibung

Die vorliegende Erfindung betrifft eine Polierscheibe, welche einen Polierkörper aus einem Polyurethanschaum aufweist, insbesondere eine Polierscheibe für lackierte Flächen.

Als Polyurethane werden Polymere bezeichnet, deren Wiederholungseinheiten durch Urethan-Gruppierungen -NH-CO-O- verknüpft sind. Polyurethane werden im Allgemeinen erhalten durch Polyaddition aus zwei- oder höherwertigen Alkoholen und zwei- oder höherwertigen Isocyanaten. Der Einsatz von bifunktionellen Alkoholen und Isocyanaten in äquimolaren Verhältnissen führt zu linearen Polyurethanen. Verzweigte und vernetzte Produkte fallen bei Verwendung bzw. Mitverwendung von höher funktionellen Edukten bzw. auch bei Isocyanat-Überschuss an, bei dem Isocyanat-Gruppen mit Urethan- bzw. Harnstoffgruppen unter Ausbildung von Allophanat- bzw. Biorethstrukturen reagieren. Entsprechend fallen je nach Wahl und stöchiometrischer Verhältnisse der Ausgangsstoffe Polyurethane mit sehr unterschiedlichen mechanischen Eigenschaften an, die als Bestandteile von Klebstoffen und Lacken (Polyurethan-Harze), als lonomere, als thermosplastisches Material für Lagerteile, Rollen, Reifen, Walzen verwendet werden und als mehr oder weniger harte Elastomere in Faserform oder als Polyether- bzw. Polyesterurethan-Kautschuk, als duroplastische Gießharze und vor allem aber als Schaumkunststoffe vielfältige Einsatzmöglichkeiten finden.

Polyurethanschäume entstehen bei der Polyaddition, wenn Wasser und/oder Carbonsäuren zugegen sind, wobei diese mit Isocyanaten unter Abspaltung von auftreibendem und schaumbildend wirkendem Kohlendioxid nach folgender Gleichung reagieren.

R-N=C=O + HOH + O=C=N-R → R-NH-CO-NH-R + CO₂

Mit Polyalkylenglycolethern als Diolen und Wasser als Reaktionskomponente gelangt man beispielsweise zu Polyurethanweichschäumen, mit Polyolen und Treibgasen aus beispielsweise FCKW erhält man Polyurethanhartschaumstoffe sowie Struktur- oder Integralschaumstoffe. Gewöhnlich werden hierbei Hilfsstoffe zugesetzt, beispielsweise Katalysatoren, Emulgatoren, Schaumstabilisatoren, Pigmente, Alterungs- und Flammschutzmittel.

Meist benutzt man Polyurethanschaumstoffe in großem Umfang zur Herstellung von Kissen, Matratzen, Polstermöbeln, Schwämmen, als Verpackungsmaterial, Isoliermaterial bei Bauten, Kühlmöbeln, zur Beschichtung von Teppichen, Winterbekleidung usw.

Auch bekannt ist es, Polyurethanschäume als Komponente von Polierscheiben, beispielsweise zum Polieren von Lacken, einzusetzen. Bei den heute üblichen Polierprozessen werden häufig Oberflächentemperaturen von bis zu 70 °C erreicht, welche dem Lack schaden und Verbrennungen verursachen können.

Der Erfindung liegt die Aufgabe zu Grunde, eine anwendungstechnisch verbesserte Polierscheibe zu schaffen, bei dem ein kritischer Temperaturbereich einfach detektiert und somit vermieden werden kann.

Die Aufgabe wird erfindungsgemäß gelöst durch eine Polierscheibe mit einem Polierkörper aus Polyurethanschaum, wobei der Polyurethanschaum ein thermochromes Farbmittel umfasst.

Der Polierkörper der Polierscheibe besteht aus dem erfindungsgemäßen Polyurethanschaum. Bei dem Polierkörper kann es sich beispielsweise um eine Lage der Polierscheibe handeln. Hierbei ist der Polierkörper der Teil, welcher bei einem Poliervorgang mit dem Lack in Kontakt tritt. Bei zu großer Drehgeschwindigkeit der Polierscheibe bzw. zu großem Anpressdruck kommt es zu Temperaturerhöhungen, welche bis in den Bereich dringen können, welche Schaden an dem zu polierenden Lack hervorrufen. Durch Verwendung des erfindungsgemäßen Polyurethanschaums als Komponente einer Polierscheibe kann jedoch visuell wahrgenommen werden, ob man sich noch im Temperaturbereich befindet, bei dem der Lack keinen Schaden nimmt. Sobald der Farbumschlag erreicht ist, muss entweder die Rotationsgeschwindigkeit der Polierscheibe verringert oder der Anpressdruck reduziert werden. Dieses System eignet sich somit sowohl für einen menschlichen Benutzer, welcher den Farbumschlag visuell wahrnehmen kann als auch für maschinelle Polieranlagen, wobei dann beispielsweise mit einem Fotodetektor der Farbumschlag detektiert werden kann. Beispielsweise kann seitlich von der Polierscheibe eine Fotodiode angebracht sein, welche über eine Steuerungs- und Regelungseinheit die Rotationsgeschwindigkeit und den Anpressdruck der Polieranlage beeinflussen kann.

Der Polierkörper kann lösbarer oder unlösbarer Bestandteil der Polierscheibe sein.

Bevorzugt handelt es sich bei dem Polyurethanschaum um einen offenzelligen, geschlossenzelligen oder gemischtzelligen Polyurethanschaum. Dabei kann der Polyurethanschaum linear oder vernetzt sein.

Ein linearer Polyurethanschaum wird erhalten, indem bifunktionelle Diole mit bifunktionellen Isocyanaten umgesetzt werden.

Geeignete Diisocyanat-Komponenten sind beispielsweise ausgewählt aus Diphenylmethandiisocyanat (MDI), polymeres Diphenylmethandiisocyanat (PMDI), Toluylendiisocyanat (TDI), Naphtylendiisocyanat (NDI), Hexamethylendiisocyanat (HDI), Isophorondiisocyanat (ITDI) und 4,4-Diisocyanatodicyclohexylmethan (H12MDI).

Als Diolkomponente können beispielsweise Verbindungen der Formel HO-R-OH verwendet werden, wobei R vorzugsweise ausgewählt ist aus einer Alkylengruppe mit 1 bis 40 C-Atomen. Dabei können eine oder mehrere der CH₂-Gruppen des Alkylens ersetzt sein durch -O- oder -COO-, wobei dann ein Polyetherdiol bzw. ein Polyesterdiol entsteht.

Im Rahmen der vorliegenden Erfindung werden unter einer Alkylgruppe mit 1 bis 40 C-Atomen, wobei eine oder mehrere der CH₂-Gruppen des Alkylens ersetzt sein durch -O- oder -COO- bevorzugt die Reste Methyl, Ethyl, n-Propyl, i-Propyl, Cyclopropyl, n-Butyl, i-Butyl, s-Butyl, t-Butyl, Cyclobutyl, 2-Methylbutyl, n-Pentyl, s-Pentyl, Cyclopentyl, n-Hexyl, Cyclohexyl, n-Heptyl, Cycloheptyl, n-Octyl, Cyclooctyl, 2-Ethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Ethinyl, Propinyl, Butinyl, Pentinyl, Hexinyl oder Octinyl verstanden.

Verzweigte bzw. vernetzte Polyurethane können einerseits erhalten werden, indem mit einem Überschuss an der Isocyanat-Komponente gearbeitet wird. Ferner können zur Erzeugung vernetzter bzw. verzweigter Strukturen höherwertigere IsocyanatKomponenten und Polyol-Komponenten verwendet werden, beispielsweise Toloylendiisocyanat in Verbindung mit einem Polyol (beispielsweise mit Glycerol).

Erfindungsgemäß umfasst der Polyurethanschaum ein thermochromes Farbmittel. Als Farbmittel können sowohl ein thermochromer Farbstoff als auch ein thermochromes Pigment Verwendung finden. Der Farbstoff bzw. das Pigment kann ferner anorganisch oder organisch sein.

Ein Farbstoff zeichnet sich beispielsweise dadurch aus, dass er bezüglich einer Matrix, in der der Farbstoff eingesetzt wird, löslich ist. Pigmente hingegen sind generell unlöslich, wobei dies insbesondere auf anorganische Pigmente zutrifft. Auch organische Farbmittel können als Pigment vorliegen, wobei diese jedoch meist abhängig vom Lösungsmittel (der Matrix) entweder als Pigment oder als Farbstoff vorliegen können.

Insbesondere ist bevorzugt, dass das thermochrome Farbmittel einen Farbumschlagspunkt im Bereich von etwa 50 bis 70 °C, mehr bevorzugt von 55 bis 65 °C, insbesondere 60 °C aufweist. Da Lacke bereits bei etwa 70 °C erste Temperaturschäden erfahren können, ist es also bevorzugt, dass der Farbumschlagspunkt des thermochromen Farbmittels etwas unterhalb dieser Temperatur liegt.

In einer weiteren Ausführungsform der Erfindung ist es bevorzugt, dass das thermochrome Farbmittel einen Farbumschlagspunkt im Bereich von etwa 20 bis 50 °C aufweist. Dieser Bereich ist beispielsweise für andere Anwendungen geeignet.

Die Farbumschlagspunkte können sehr genau eingestellt werden, vorzugsweise in Abstufungen von 5 +/- 2 °C.

Der Farbumschlag soll im Sinne der Erfindung bevorzugt von farbig nach farblos erfolgen. Insbesondere ist bevorzugt, dass das thermochrome Farbmittel zu Beginn rot ist und bei Erreichen der Farbumschlagstemperatur nach farblos wechselt. Ebenso können aber auch alle anderen Farben erfindungsgemäß eingesetzt werden, z.B. blau, grün, schwarz, gelb usw. Vorzugsweise ist der Farbumschlag reversibel. Der Farbwechsel geht also beim Abkühlen des Polierkörpers wieder zurück.

In einer Ausführungsform der Erfindung ist es bevorzugt, dass das thermochrome Farbmittel in einer Mikrokapsel eingeschlossen ist. Die Außenhülle der Mikrokapsel ist vorzugsweise transparent, um einen Farbumschlag visuell wahrnehmen zu können.

Die Mikrokapsel enthält ferner eine Matrix und eine Aktivatorverbindung.

Als Matrix dient vorzugsweise ein festes Lösungsmittel. Dieses ist beispielsweise ausgewählt aus Wachsen, niedrig schmelzenden thermoplastischen Harzen, Kautschuk, natürlichen Harzen und synthetischen Harzen. Beispiele dafür sind niedrig molekulargewichtige Polyethylene, niedrig schmelzende Polyester, Ethylenvinylacetatcopolymer, chlorierter Kautschuk, eine Polyvinylacetat-Emulsion, eine Polyethylen-Emulsion, eine Acryl-Emulsion, eine Styrolharz-Emulsion, eine Butadiennitril-Emulsion, Schelllack, Tein, ein ungesättigtes Polyesterharz, ein Epoxyharz, ein Zelluloseharz, ein Polyurethanharz, ein Phenolharz, ein Vinylchloridharz, ein Vinylacetatharz, ein Silikonharz, Polyvinylalkohol, Polyvinylmethylether usw. Insbesondere bevorzugt ist, dass das feste Lösungsmittel einen Schmelzpunkt im Bereich von etwa 50 °C bis 65 °C aufweist. Liegt der Farbumschlagsbereich bei geringeren Temperaturen, also bei etwa 20 bis 50 °C, so soll das feste Lösungsmittel ebenfalls einen Schmelzbereich von 20 bis etwa 50 °C aufweisen. Durch das Aufschmelzen wird dem thermochromen Farbmittel die Möglichkeit gegeben, mit der Aktivatorverbindung in Kontakt zu treten, wodurch dieses reversibel einen den Farbumschlag von farbig nach farblos erfährt. Entsprechend ist bevorzugt, dass die Aktivatorverbindung in der Lage ist, bei Kontakt mit dem thermochromen Farbmittel in einer geschmolzenen Matrix einen Farbumschlag von farbig nach farblos bei dem Farbmittel herbeizuführen.

Das thermochrome Farbmittel ist bevorzugt im Bereich von 1 bis 10 Gew.-%, vorzugsweise 2 bis 5 Gew.-%, bezogen auf das Gesamtgewicht des Polyurethanschaums, in dem Polyurethanschaum vorhanden.

Die Herstellung eines Polyurethanschaums wie oben definiert, umfasst die Schritte:
a) Zudosieren einer Diol- oder Polyol-Komponente zu einer lsocyanat-Komponente,
b) Zugeben einer Additivkomponente,
wobei entweder die Diol- oder Polyol-Komponente oder die Additivkomponente ein thermochromes Farbmittel umfassen.

Vorzugsweise ist das thermochrome Farbmittel im Bereich von > 0 bis 20 Gew.-% in der Diol- oder Polyol-Komponente oder der Additivkomponente vorhanden. Die Angabe des Gewichtsbereichs bezieht sich hier auf Gew.-% bezogen auf die Gesamtmenge der Diol- oder Polyol-Komponente bzw. der Additivkomponente.

Als thermochromes Farbmittel kann insbesondere ein thermochromer Farbstoff oder ein thermochromes Pigment verwendet werden. Das Pigment kann vor der Verarbeitung direkt in die zu verschäumende Polyolformulierung eingearbeitet werden. Aufgrund der niedrigen Ausgangsviskosität des Polyolblends sind hier Füllgrade von 0 bis 20 % bezogen auf das Polyol möglich. 5 % Anteil an Pigment in der Polyolkomponente sind jedoch meist ausreichend, um den gewünschten Effekt deutlich darzustellen.

Die weitere Möglichkeit zur Einbringung des Farbstoffs in das Reaktionsgemisch ist auch über eine Dosierung in Kombination mit bestimmten Additivkomponenten möglich. Diese Variante bietet sich bei der Verwendung von Mehrkomponentenmischköpfen an. Eine z.B. wässrige Pigmentdispersion kann über eine separate Dosierleitung dem Reaktionsgemisch direkt an einem Mischkopf zugeführt werden. Vorteilhaft ist hierbei jedoch, wenn das Wasser/Farbgemisch unter ständigem Rühren gehalten wird, um Absetzungseffekte des Pigments zu vermeiden. Der Füllgrad, d.h. die Farbkonzentration kann hierbei bis zu 20 % Pigment in Wasser betragen. Diese Variante bietet sich auch für den Weichschaumprozess an. Der Vorteil hierbei sind höhere Füllgrade und somit stärkere Farbintensitäten. Die wässrige Farbdispersion beeinflusst jedoch direkt die Rohdichte des Schaumstoffs.

Wie oben bereits angemerkt, kann das thermochrome Farbmittel in einer Mikrokapsel eingeschlossen werden. Die Mikrokapsel kann dabei eine Matrix und eine Aktivatorverbindung enthalten, wobei als Matrix vorzugsweise ein festes Lösungsmittel, wie oben definiert, verwendet wird. Das feste Lösungsmittel soll wiederum einen Schmelzpunkt im Bereich von etwa 50 °C bis 65 °C aufweisen oder einen Schmelzpunkt von 20 bis 50 °C, wenn der Farbumschlag im Bereich von 20 bis 50 °C liegt.

Der erfindungsgemäße als Polierscheibe bzw. Polierkörper einer Polierscheibe zum Einsatz gelangende Polyurethanschaum wird nachfolgend anhand einiger Ausführungsbeispiele, welche nicht als limitierend auf den Umfang der Erfindung zu verstehen sind, näher erläutert werden.

### Ausführungsbeispiele:

### Ausführungsbeispiel 1: PU-Weichschaum

| Ansatz des Polyolblends 1: | |
|---|---|
| Polyesterpolyol OH-Zahl 60: | 100 GT (Gewichtsteile) |
| Tertiäres Amin: | 1,5 GT |
| lonischer Emulgator: | 4,0 GT |
| Nichtionischer Emulgator: | 1,0 GT |
| Wasser: | 4,0 GT |

| Ansatz der Polyolblend/ Farbstoffdispersion | |
|---|---|
| Polyolblend 1: | 100 GT |
| Thermochromer Farbstoff: | 10,0 GT |
| | |
| Schaumrezeptur: | |
| | |
| Polyolblend 1: | 100 GT |
| Polyolblend/ Farbstoffdispersion: | 20 GT |
| TDI 65: | 63,5 GT |

### Prozessparameter:

| | |
|---|---|
| Polyolblend 1: | 30°C |
| Polyolblend/ Farbstoffdispersion: | 45°C |
| TDI 65: | 20°C |
| Startzeit: | 10 s |
| Reaktionszeit: | 2min 20s |
| Rohdichte: | 25 Kg/m³ |

Farbumschlag erfolgt von rot nach farblos bei 65°C.

### Ausführungsbeispiel 2: PU-Weichschaum

| Ansatz des Polyolblends 2: | |
|---|---|
| Polyesterpolyol OH-Zahl 50: | 100 GT |
| Tertiäres Amin: | 1,7 GT |
| Silikon-Stabilisator: | 2,5 GT |
| Wasser: | 2,8 GT |

| Ansatz der Polyolblend/ Farbstoffdispersion | |
|---|---|
| Polyolblend 2: | 100 GT |
| Thermochromer Farbstoff: | 15,0 GT |
| | |
| Schaumrezeptur: | |
| | |
| Polyolblend 2: | 100 GT |
| Polyolblend/ Farbstoffdispersion: | 25 GT |
| TDI 80: | 46 GT |

### Prozessparameter:

| | |
|---|---|
| Polyolblend 2: | 40°C |
| Polyolblend/ Farbstoffdispersion: | 45°C |
| TDI 65: | 20°C |
| Startzeit: | 7 s |
| Reaktionszeit: | 1min 40s |
| Rohdichte: | 35 Kg/m³ |

Farbumschlag erfolgt von schwarz nach farblos bei 55°C.

### Ausführungsbeispiel 3: PU-Hartschaum

| Ansatz des Polyolblends 3: | |
|---|---|
| Polyetherpolyol trifunktionell, OH-Zahl 400: | 78,0 GT |
| Polyetherpolyol difunktionell, OH-Zahl 250: | 11,0 GT |
| TEG: | 8,0 GT |
| Tertiäres Amin: | 0,50 GT |
| Silikon- Stabilisator: | 2,5 GT |

| Ansatz der Wasser/Farbstoffdispersion | |
|---|---|
| Wasser: | 100 GT |
| Thermochromer Farbstoff: | 20,0 GT |
| | |
| Schaumrezeptur: | |
| | |
| Polyolblend 3: | 97,0 GT |
| Wasser/ Farbstoffdispersion: | 3,0 GT |
| PMDI: | 123,5 GT |

### Prozessparameter:

| | |
|---|---|
| Polyolblend 3: | 25°C |
| Wasser/ Farbstoffdispersion: | 25°C |
| PMDI: | 25°C |
| Startzeit: | 30 s |
| Reaktionszeit: | 4min 30s |
| Rohdichte: | 60 Kg/m³ |

Farbumschlag erfolgt von blau nach farblos bei 25°C.

## Patentansprüche

1. Polierscheibe, welche einen Polierkörper aus einem Polyurethanschaum aufweist, **dadurch gekennzeichnet, dass** der Polyurethanschaum ein thermochromes Farbmittel umfasst.

2. Polierscheibe gemäß Anspruch 1, **dadurch gekennzeichnet, dass** der Polyurethanschaum ein offenzelliger, geschlossenzelliger oder gemischtzelliger Polyurethanschaum ist.

3. Polierscheibe gemäß Anspruch 1 oder 2, **dadurch gekennzeichnet, dass** der Polyurethanschaum linear oder vernetzt ist.

4. Polierscheibe gemäß einem der Ansprüche 1 bis 3, **dadurch gekennzeichnet, dass** das thermochrome Farbmittel ein thermochromer Farbstoff oder ein thermochromes Pigment ist.

5. Polierscheibe gemäß einem der Ansprüche 1 bis 4, **dadurch gekennzeichnet, dass** das thermochrome Farbmittel einen Farbumschlagspunkt im Bereich von 50 bis 70 °C, bevorzugt etwa 60 °C, aufweist.

6. Polierscheibe gemäß einem der Ansprüche 1 bis 4, **dadurch gekennzeichnet, dass** das thermochrome Farbmittel einen Farbumschlagspunkt im Bereich von 20 bis 50 °C, aufweist.

7. Polierscheibe gemäß einem der Ansprüche 1 bis 6, **dadurch gekennzeichnet, dass** das thermochrome Farbmittel in einer Mikrokapsel eingeschlossen ist.

8. Polierscheibe gemäß Anspruch 7, **dadurch gekennzeichnet, dass** die Mikrokapsel ferner eine Matrix und eine Aktivatorverbindung enthält.

9. Polierscheibe gemäß Anspruch 8, **dadurch gekennzeichnet, dass** die Matrix ein festes Lösungsmittel ist.

10. Polierscheibe gemäß Anspruch 9, **dadurch gekennzeichnet, dass** das feste Lösungsmittel einen Schmelzpunkt im Bereich von etwa 50 °C bis 65 °C oder 20 bis 50 °C aufweist.

11. Polierscheibe gemäß einem der Ansprüche 8 bis 10, **dadurch gekennzeichnet, dass** die Aktivatorverbindung in der Lage ist, bei Kontakt mit dem thermochromen Farbmittel in einer geschmolzenen Matrix einen Farbumschlag von farbig nach farblos bei dem Farbmittel herbeizuführen.

12. Polierscheibe gemäß einem der voranstehenden Ansprüche, **dadurch gekennzeichnet, dass** das thermochrome Farbmittel im Bereich von 1 bis 11 Gew.-%, bezogen auf das Gesamtgewicht des Polyurethanschaums, in dem Polyurethanschaum vorhanden ist.
